# EUROPEAN PATENT APPLICATION

(11) **EP 2 689 905 A2**
(43) Date of publication of application: **29.01.2014**
(21) Application number: 13003706.2
(22) Date of filing: 06.07.2009
(51) Int. Cl.: B28B 3/02, B28B 5/02, B28B 11/24, B29C 67/24, C04B 26/10, C04B 26/18

(54) **Surface covering or forming products and mixture for the manufacture of surface covering or forming products**

(30) Priority: 07.07.2008 IT PS20080020; 24.10.2008 IT PS20080023; 16.12.2008 IT PS20080026
(62) Divisional of application: 09786527.3
(71) Applicant: Canti, Max, 61012 Gradara (PU) (IT)
(72) Inventor: Canti, Max, 61012 Gradara (PU) (IT)
(74) Representative: Bergamini, Silvio

(57) **Abstract**

The Surface covering or forming products obtainable from a mixture for the manufacture of surface covering or forming products , has a body that comprises at least:
- a temperature-sensitive resin matrix;
- a mass of inert materials mixed with said resin matrix, selected from said first group of inert materials and second group of inert materials.

## Description

Surface covering or forming products and a mixture for the manufacture of surface covering or forming products.

### Field of the invention

The invention is a divisional application of the parent application EP 2.310.189 (application No.: 09786527.3) filed on 06/07/2009, and relates to a surface covering or forming products and a mixture for the manufacture of surface covering or forming products.

### Background art

The closest prior art of this invention is described in Italian Patent Application PS2008A000008, "Processo per ottenere una lastra di materiale lapideo conglomerato per rivestimento o calpestio e prodotti con esso ottenuti" (Process of making a slab of conglomerate stone material for use as a covering or a walkway and products obtained therefrom).

This invention discloses the addition of a thermosetting powder to a mixture of inert materials and a liquid two-component resin matrix, as typically used for making surface covering products.

Then, the mixture is introduced into a die of a press, which is also equipped with a heating device that can heat the mixture in the die as the products are formed, and cause matrix curing.

However, the use of resin matrices causes fouling of product manufacturing equipment, thereby requiring frequent scaling and accurate cleaning thereof.

Such cleaning and maintenance processes require the product manufacturing cycle to be shut down, thereby involving high manufacturing costs due to long processing cycle times.

The addition of a thermosetting powder to the mixture of inert materials and resin matrices, as taught in PS2008A000008 partially solved the equipment fouling problem, and provided a high throughput manufacturing process, while obviating the actuator fouling problem, by providing a less fouling or totally non-fouling mixture and hence avoiding any cleaning downtime.

Tests conducted when the above application had already been filed, as well as the awareness that this process could be implemented at no cost in any ceramic time manufacturing plant, led to the design of this additional process that can provide considerable throughput improvements as compared with prior art conglomeration processes.

Another problem of the prior art is that the cycle for the manufacture of surface covering products uses presses that operate by successive pressing steps, which limits the throughput rate due to the need of waiting for the end of each step before starting the next one.

This method of making surface covering products has also been used in the above mentioned patent no. PS2008A000008.

A further problem of the prior art is that the surface covering products that may be obtained from mixtures of inert materials and resin matrices cannot have low or high relief decorations on their exposed surfaces, i.e. those that are called in the art "structured surfaces", because such mixtures are introduced into a vibrating container before entering the forming press, which makes it more homogeneous but forcibly creates totally flat surfaces on both the laying and exposed sides.

Therefore, structured surfaces may be only obtained by the provision of a step in which materials are added to the flat surfaces after pressing, as well as other arrangements, after the formation of low or high relief decorations, to ensure adhesion thereto.

Yet another drawback of the prior art is that the products obtained from the mixtures of liquid resin matrices, even when they include thermosetting powders, have considerable thickness and weight.

Another problem of the prior art is that, once the liquid resin matrices are cured, the products are consolidated in their shape as defined in the press molds and cannot be changed, for example to fit surfaces of particular shapes, e.g. concave or convex surfaces.

A further drawback of the prior art is that the products whose thickness is reduced, e.g. mechanically by abrasion, become weaker and incapable of supporting high loads.

### Obiects of the invention

One object of the invention is to improve the state of the art.

Another object of the invention is to provide surface covering or forming products by means of a process for obtaining a mixture of inert materials, even derived from scraps, containing a predetermined amount of resin matrices as normally used in industrial dry painting, while ensuring that no deposit or scale remains on manufacturing equipment and plants upon curing of these resin matrices.

A further object of the invention is to provide a process of making a mixture for the manufacture of surface covering or forming products and a mixture obtained from such process, which reduce work cycle times as compared with the prior art.

Another object of the invention is to provide a process of making a mixture for the manufacture of surface covering or forming products and a mixture obtained from such process, which can provide products with structured surfaces, i.e. with low and high relief decorations.

Yet another object of the invention is to provide a process of making a mixture for the manufacture of surface covering or forming products and a mixture obtained from such process, which allow, if needed, the application of decorations on the exposed surfaces of the products directly during the work cycle.

A further object of the invention is to provide a process of making a mixture for the manufacture of surface covering or forming products and a mixture obtained from such process, which allow the introduction of reinforcement or heat insulating elements in the products, thereby making them more suitable for forming heat insulated covers and walls.

A further object of the invention is to provide a process of making a mixture for the manufacture of surface covering or forming products and a mixture obtained from such process, which can provide products that may be adapted to concave, convex or otherwise irregular surfaces.

In one aspect, the invention provides a process of making a mixture for the manufacture of surface covering or forming products and a mixture obtained from such process, as defined in claim 1.

In another aspect, the invention provides a process of making a mixture for the manufacture of surface covering or forming products and a mixture obtained from such process, as defined in claim 10.

In another aspect, the invention provides a process of making a mixture for the manufacture of surface covering or forming products and a mixture obtained from such process, as defined in claim 27.

The process of making a mixture for the manufacture of surface covering or forming products, and the mixture obtained from this process afford the following advantages:
using resin matrices normally used in industrial dry painting, while ensuring that no deposit or scale remains on product manufacturing equipment and plants upon curing of these resin matrices;
reducing product manufacturing cycle times;
obtaining products with an exposed structured surface, i.e. having high or low relief decorations;
obtaining thin products that maintain a high mechanical resistance;
obtaining products with decorations directly introduced during the manufacturing cycle;
obtaining products that have high heat insulation properties;
obtaining products that may be adapted to irregular surfaces even after forming.

### Brief description of the drawings

Further characteristics and advantages of the invention will appear more clearly from the description of a plant for manufacturing surface covering or forming products which implements a process of making a mixture for the manufacture of surface covering products and a mixture obtained from the process of the invention, which is shown by way of illustration and without limitation in the accompanying drawing, in which:

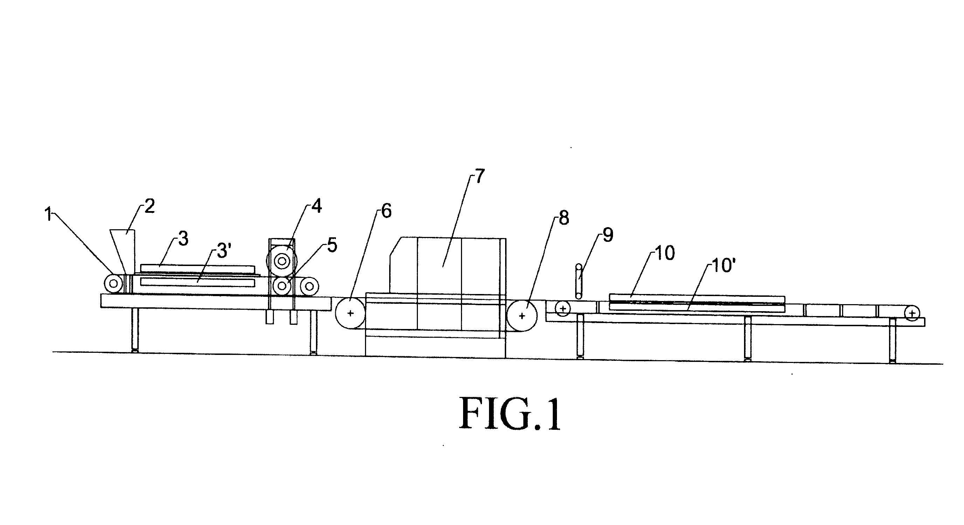

Figure 1 is a diagrammatic side view of a plant for manufacturing surface covering or forming products, which implements a process for manufacturing the products of the invention.

### Embodiments of the invention

Referring to Figure 1, a plant for manufacturing surface covering or forming products which implements a process for manufacturing the products of the invention is shown to comprise a conveyor 1 upon which, in a first station, a feeding tray 2 deposits a layer of a powdered mixture to make surface covering or forming products, which mixture is obtained upstream from the feeding tray 2 in a second mixing station, not shown.

Two opposed infrared ray emitters 3 and 3' are mounted along the conveyor 1, namely above and below the upper operating branch thereof, in a third pre-heating station, for pre-heating the mixture that passes therebetween on the conveyor 1.

A pre-compaction unit is located downstream from the two emitters 3 and 3', in a seventh pre-compaction station, and comprises a tamping roller 4 which rolls against an underlying counteracting roller 5.

The position of at least the tamping roller 4 is adjustable relative to the counteracting roller 5, to obtain a predetermined pressure on the layer of mixture moving therebetween.

After pre-compaction, the layer of mixture is transferred to the flexible surface 6 of a continuous press 7 which is located on a fourth pressing station and is equipped with an additional movable pressing surface (not shown) operating in synchronism with the surface 6 and with a surface that converges towards the latter at a predetermined convergence angle, to obtain a predetermined pressing load on the layer of mixture continuously moving therebetween.

As the layer of mixture is pressed by the continuous press 7, it is transferred to a further movable conveying surface 8 (which may also be a seamless extension of the flexible surface 6) and is conveyed thereby through another pair of infrared irradiation elements 10 and 10' located in a fifth irradiation station, which radiate heat up to a curing temperature of the resin matrix contained in the mixture.

According to a first possible embodiment of a process of making a mixture for the manufacture of surface covering or forming products and a mixture obtained from such process, a mixture is obtained, which includes inorganic inert materials, such as quartz, marble, glass, ceramic scraps or else in powder or granule form, and a thermosetting electrostatic powder, of the type that is normally used in environmentally-friendly painting processes, with varnishes or paints, which mixture is stored in containers, such as a bin, for later use.

However, if immediate use is required, the mixture will be instantly prepared in a mixer apparatus, by the addition of a non-fouling liquid to obtain a slight moistening effect; this liquid may be, for example, water, like in the preparation of ceramic clay, to prevent air from being polluted by inhalable powder, during transport to the point of use and to make mixture compactable.

The amount of added thermosetting powder is 5% by weight or more, preferably about 10%.

The same amount of thermosetting powder is used to obtain thermoformable stone elements.

Furthermore, combinations of the two powders provide products with different technical properties, such as partial plastication to change the crystalline nature of the conglomerate.

According to the invention, thermoplastic powders, such as acrylic powders and polyvinyl or polyurethane powders, may be added also as a suspension in the above mentioned moistening water.

Such slight moistening effect is required, like in the case of ceramic clay, to hold the mixture compacted during baking: nevertheless, moisture is gradually eliminated before melting of the curable resin.

Then, the mixture is directly introduced as a uniform layer into a forming drawer of a ceramic press, or onto an interposed metal sheet having a perfectly closed self-releasing surface, plated with chromium or nickel or previously treated with release agents, with a predetermined layer of electrostatic powdered paint being previously coated thereon.

According to the invention, the surface of the metal sheet may be also decorated with relief textures and the layer of electrostatic powdered paint may be deposited with the interposition of a series of silk screens for powders, to obtain multicolored decorative designs.

As the mixture of inert materials and binding powder is uniformly laid into the drawer, it is pressed and later removed and conveyed to a curing kiln with or without the interposition of the metal sheet tray.

In the curing kiln, generally of vertical type, temperature is gradually increased to 180-200°C and is maintained at such maximum designed value for a few minutes, whereupon a gradual cooling cycle is started.

At the exit of the curing kiln, a pick up means, normally a device equipped with a suction plate, picks up the product so formed, normally in the form of a conglomerate stone slab, whereas the metal sheet tray, if any, is recovered for later use.

This provides, by a conglomeration process, a stone conglomerate (slab) product already having a colored decorative surface, possibly with multicolored patterns and reliefs, or flat conglomerate slabs, with a colored resin matrix, in which the decorative effect is obtained by surface grinding, to highlight the larger particles of contrasting colors.

Furthermore, the elimination of any fouling problem caused by the use of liquid resins in an amount required for conglomeration affords a much higher throughput than in prior art conglomeration processes, comparable to those of a ceramic production line.

A further advantage of the process of the invention is the lack of any fouling of the actuator means, even when the mixture has to be enriched with the binding resin matrix to obtain superior mechanical characteristics of the element being formed.

Another advantage of the process of the invention is that, in combination with the use of the finishing metal sheet during transfer from the press to the kiln and during mixture curing, a very thin product may be obtained.

According to a second embodiment of the invention, a homogeneous mixture is obtained, which includes organic inert materials (such as quartz, marble, glass, ceramic scraps or else in powder or granule form, also in various combinations and with the addition of decorative inclusions of larger particle size) and a transparent or colored thermosetting powder, of the type that is normally in use in environmentally-friendly painting processes with electrostatic or gravity dry deposition, through perforated screens; this mixture may be collected in containers, such as bins, for later use.

However, if immediate use is required, like in the above described embodiment, the mixture will be prepared in a mixer apparatus, by the addition of a non-fouling liquid to obtain a slight moistening effect; this liquid may be water, like in the preparation of clay, to prevent air from being polluted by inhalable powder, during transport to the point of use and to allow mixture compaction and plastication.

The moistening liquid essentially comprises aqueous acrylic or vinyl suspensions to impart plasticity and enhance the grip of an upper inclined surface of a continuous press.

The amount of added thermosetting powder is of 4% to 20% by weight, depending on the use of transparent pure resin or colored powders; the thermosetting powder may be an epoxy resin, adapted to form interior surface covering products or a mixed epoxy-polyester or polyester resin to form exterior surface covering products.

Polyester resins are recommended for their high UV resistance, which makes them suitable for surface protection of architectural metals for outdoor use.

Using the ceramic processing method, a uniform layer of mixture is formed, possibly by combining various colored mixtures in predetermined amounts to obtain a marbled effect or textures in the mass, which layer is submitted to the action of a continuous compaction press, at a pressure of 50 to 100 kg/cm², or even more.

Then, the compacted mixture is directly exposed to a heat source, e.g. by being caused to pass through a fan kiln at a temperature of about 180°C - 200°C, and being continuously held at such temperature, as detected in the middle of the product section, for at least 10 minutes, and anyway for the time required for complete curing of the thermosetting powder matrix, as typically indicated by manufacturers.

According to a variant of the process, the mixture may be first exposed to lower temperatures, and then to the temperatures required for curing the thermosetting material, because the binding powder first softens as a thermoplastic material: this may provide products to be later used to cover curved or otherwise shaped elements.

Here, the covering products are thermoformed by gravity, by placing them on specially designed jigs during thermoset curing, upon reaching the curing temperature, which is normally indicated, as mentioned above by the resin powder manufacturer, and may be even lower than 170°C.

Formats may be cut to predetermined lengths either before introduction into the curing kiln or later, on the cured product, normally in slab form.

According to the invention, prior to introduction of the mixture into the curing kiln, colored powders may be placed thereon by gravity, e.g. by means of screens ordinarily used for dry decoration of majolica, to form uniform backgrounds or ornamental designs.

The process of the invention may also include the introduction of fiber nets in the mixture, during layer formation, to reinforce the interior of the product or conglomerate slab: these nets may be unwound by one or more restricted-motion un-winders.

These un-winders can also, if needed, unwind metal sheets with thicknesses of a few tenths of millimeter, capable of receiving a known amount of thermosetting powder and an additional layer of mixture of inert materials and thermosetting powder deposited thereon electrostatically of by gravity, the latter being hence firmly attached to the product, after compaction and curing, to form a functional and decorative surface.

In this case, the products will be cut with an in-line cutting method, i.e. without stopping the translational motion of the layer of powders that has been cured by passing through the curing kiln.

The layer of mixed powders may be carried into the curing kiln by a Teflon®-coated glass fiber belt, appropriately stretched around drive and idle rollers, to define a plane, so that the product (in slab form) maintains perfect planarity when the resin softens and becomes liquid before irreversible curing; this kind of belt allows easy release of the cured product.

As an alternative to the above mentioned reinforcement fiber nets, the mechanical resistance of the elements may be also increased by dispersing loose fibers, of inorganic, organic, artificial or natural type, within the mixture.

Decorative inclusions resulting from partial surface grinding may include larger particles of colored minerals, colored glass, metals, heat-resistant plastic scrap materials, such as the polycarbonate used for making compact disks, which has a light decomposition power.

The mixture may be composed of sludge resulting from porcelain stoneware polishing or glass grinding, after making it anhydrous, with resin resulting from scraps from metal plasticization by electrostatic deposition, which comes into the air-purifying filters, which solves environmental impact problems of two different industries and provides a conglomerate at the same cost as simple surface decoration.

If such decoration is performed on the compacted slab with powdered paints, it may be performed also at a later time on the cured product (slab), by exposing it again to heat, after deposition of the decorative powder, which makes the process even more flexible in terms of decoration options.

Final effects, e.g. of chromium plating, may be obtained on the surface, by the use of metalized powders, and the product (slab) becomes highly functional as well as highly decorative, due to its characteristic of reflecting infrared heat radiation, when the product is used to cover surfaces of continuous façades of buildings in high-insolation countries.

The process of the invention affords another advantage in terms of safety and health of environmental operators, exposed in the prior art, to styrene monomer and organic peroxides, which are both known to be cancerous.

Further advantages as compared with currently used stone conglomerates include the possibility of not being bound by formwork sizes, and hence of increasing the length of the slabs as required by industry, e.g. by the furniture industry, and the possibility of mass decoration of the products with marbled effects, as well as surface decoration options that considerably increase the potential application range, and finally the possibility of reducing product thicknesses, thereby reducing manufacturing and transportation costs, and extending the application range to all kinds of light construction, like in the field of elevators and in the naval industry, for easier product handling and installation.

According to a further embodiment of the invention, a third process variant is provided to enhance adhesion and hence homogeneous grip between an inclined surface of a continuous press, here lying on a lower support plate, and the loose mixture of inert materials and binding thermosetting resin during compaction.

A further object of the third variant is to obtain products in form of slabs of pressed mixture to be exposed after a pre-heating and cooling step, to final heating at a thermosetting temperature, during simultaneous thermoforming.

Another object that can be fulfilled by this third variant is to obtain slabs having a marbled effect, with veins propagating in their mass, and allowing light to pass therethrough, like in highly valuable natural crystalline concretions, such as onyx, jade, alabaster, etc.

Another object that can be fulfilled by this third variant is to obtain products having a glazed, light-reflecting surface, like in road signs.

In this third variant, the mixture is laid in a perfectly dry state, by being extracted using a conveyor belt, from a flush-filled forming drawer of a press having an adjustable transverse slot at the base and in the forward direction of the manufacturing cycle.

Then, the mixture is caused to reach the plastic state, by submitting it to a pre-heating step, at a temperature of 30°C to 80°C, or even more, which is obtained by placing a controlled infrared ray heat source above and below the conveyor belt that passes through the continuous press, without ventilation, at least in the first pre-heating section, to prevent raising of finer powders.

In this third variant, the belt conveyor may be omitted, by extending the closed-loop lower flexible steel surface at the entry side, and directly placing the mixture thereon.

However, if a belt conveyor, made of teflon-coated glass or kevlar fibers, is still provided, it may also not extend through the continuous press: nevertheless, in this case, the layer of mixture must be submitted, before being transferred into the continuous press, to the pressure of a large-diameter roller counteracting another roller placed under the belt; two compacted surface crusts will be thus formed, due to the softening of the binding plastic powder matrix, allowing loss-free transfer between the first conveyor belt and the lower flexible support plate of the continuous press, and later exchange, after pressing, between the lower flexible support plate of the press and the conveyor belt that is part of the curing dryer (or kiln).

The mixture pre-heating step may be carried out at a temperature even more than eighty degrees, for the pressed mixture to be later exposed to the curing heat cycle, in the curing kiln, with a higher starting temperature, and be able to reach the thermosetting temperature in a shorter path or at higher speed, but without ever exceeding the temperature of 150°C, before the pressing step, to never exceed the thermosetting temperature of the powdered resin of the type that is usually employed for metal painting, i.e. about 170°C for twenty minutes heating time, or 200°C for seven minutes, or a temperature of 100°C. when another type of resin is used, of the type employed in environmentally-friendly dry painting of MDF wood, whose thermosetting temperature is of about 120°C to 130°C.

When this resin powder matrix is used, the same method may be employed to also conglomerate wood dust or loose vegetable fibers or organic particles of different nature, such as thermoplastic scrap materials that have various different melting points and cannot be separated by density, or thermosetting, unrecyclable plastic scrap materials, such as polyester or epoxy glass-fiber reinforced plastic materials, or other composite materials, to obtain environmentally friendly formaldehyde-free thin fibrous panels.

Since the mixture is pressed at temperatures below the thermosetting temperature, slabs are obtained by cooling, which can be later submitted to thermoforming by softening and adaptation to gravity molds or molds with a vacuum membrane, and later heated to the thermosetting temperature for their shape to become irreversible.

For example, this will allow the provision of corrugated sheets or roofing tiles, steps with risers, kitchen tops with risers and curved front edge, kitchen or bathroom sinks, tops with integrated sinks, shower trays, bathtubs, seats, ornamental architectural elements, street furniture, etc.

For easier thermoforming of pressed, uncured slabs, the inert part of the mixture designed for this purpose preferably consists of transparent solid glass beads, of grain sizes from 0.05 mm to 5 mm, manufactured with low energy requirements, such as those sold under the name "SiLibeads", which increase the amount of resin powder matrix.

The use of solid and transparent glass beads also provides mass-decorated slab products, with marble-like veins allowing light to pass therethrough, like in highly valuable marbles, such as onyx, jade, alabaster or other translucent crystalline concretions.

This third variant of the process of the invention also allows the use of solid glass beads with a grain size of about 0.8 mm, dispersed in the same binding powder as used for simultaneous surface glazing, which is optionally deposited by means of a known gravity apparatus, such as a silk screen, on the pressed mixture, before introduction thereof into the thermoset curing kiln, thereby obtaining a light-reflecting finished surface of the slab product, like in road signs, that will provide, for instance in outdoor cladding, a wide range of night decorations for a continuous façade of a building.

The above disclosed invention was found to fulfill the intended objects.

The invention so conceived is susceptible to a number of changes and variants within the inventive concept.

Furthermore, all the details may be replaced by other technically equivalent parts.

Thus, any materials, shapes and sizes may be used depending on particular requirements, without departure from the scope of the following claims.

## Claims

1. Surface covering or forming products obtainable from a mixture for the manufacture of surface covering or forming products, **characterized in that** they have a body that comprises at least:
- a temperature-sensitive resin matrix;
- a mass of inert materials mixed with said resin matrix, selected from a first group of inert materials selected from the group comprising:
quartz, marble, granite, basalt, scrap ceramic, possibly in combination with sludge resulting from porcelain stoneware polishing, after making it anhydrous, recycled glass, solid transparent glass beads, porous foam glass, silica sand, in combination with dyes, and a thermosetting resin powder matrix as used in environmentally-friendly dry coating of indoor or outdoor architectural metals, of epoxy, polyester, acrylic, polyurethane origin, or a mixture of epoxy and polyester resin powders, or of polyurethane origin, also suitable for gravity or electrostatic deposition on the surfaces to be protected; and
a second group of inert materials selected from a group comprising: wood dust or loose vegetable fibers, also combined together, or particles and fibers of scrap thermoplastic materials that have various different melting points and cannot be separated by density, or thermosetting, unrecyclable plastic scrap materials, selected from the group of polyester or epoxy glass-fiber reinforced plastic materials, or other composite materials, or a thermosetting resin powder matrix as used in dry painting of wood-fiber panels.

2. A mixture for the manufacture of surface covering or forming products as claimed in claim 1, **characterized in that** it comprises a mass having a total weight and comprising:
- a first amount of a temperature-sensitive resin matrix;
- a second amount of inert materials which is proportional to said first amount and selected from said first group and said second group of inert materials, mixed with said resin matrix, said first amount representing 5% or more of said total weight, said second amount being the balance by weight of said first amount, based on said weight.
